Europäisches Patentamt

European Patent Office

Office européen des brevets

(19)

(11) Publication number: **0 421 660 A2**

## (12) EUROPEAN PATENT APPLICATION

(21) Application number: **90310498.2**

(22) Date of filing: **25.09.90**

(51) Int. Cl.5: **H01M 6/04**, H01M 4/62, H01M 2/16

(30) Priority: **26.09.89 GB 8921698**

(43) Date of publication of application:
**10.04.91 Bulletin 91/15**

(84) Designated Contracting States:
**BE CH DE ES FR GB GR IT LI NL**

(71) Applicant: **Ever Ready Limited**
**Ever Ready House 93 Burleigh Gardens**
**Southgate London N14 5AQ(GB)**

(72) Inventor: **Randell, Christopher Fred, Dr.**
**Ever Ready Ltd., Techn. Division, Tanfield**
**Lea**
**Stanley Durham, DH9 9QF(GB)**

(74) Representative: **Pendlebury, Anthony et al**
**PAGE, WHITE & FARRER 54 Doughty Street**
**London WC1N 2LS(GB)**

(54) Improvements to electrical cells.

(57) A method is provided for reducing leakage from an electrical cell of the zinc chloride or Leclanche type. The method comprises the step of incorporating in the cell a compound of general formula Ar-X. Ar is an aromatic group such as benzene and X is a sulphur-containing group linked to the aromatic group by sulphur, such as a sulphonate or sulphonamide. A coating composition including the compound is also provided.

EP 0 421 660 A2

EP 0 421 660 A2

IMPROVEMENTS TO ELECTRICAL CELLS

This invention relates to improvements to electrical cells and, in particular, relates to a method for reducing leakage from electrical cells of the zinc chloride or Leclanche type under conditions of extended discharge.

Electrical cells of the zinc chloride or Leclanche type such as zinc chloride batteries, Leclanche batteries and variants on a system using zinc chloride/ammonium chloride as an electrolyte are widely used, for example in common household electrical goods. Such cells have been found to be prone to leakage under extended discharge conditions: even one to two days' continuous use of an electrical appliance can lead to the cells leaking thereby causing often irreparable damage to the appliance.

The cells usually have a casing which is made of zinc and which may act as an anode. It is usual practice to employ such casings having a thickness of zinc greater than that required for electrochemical consumption of the corresponding cathode. However, if discharge is non-uniform over the zinc casing and perforation occurs, then leakage of liquid electrolyte may still occur. Previously, small quantities of mercury have been added to the surface of the zinc to prevent wasteful corrosion by hydrogen evolution when the cells are not in use. Mercury has similarly been employed to promote uniform discharge of the zinc. However, mercury is a highly toxic substance and so it is desirable, where possible, to limit its use thereby reducing risk to the enviroment and risk of incorporation of mercury into the food chain. There is therefore a need for a less toxic means of preventing cell leakage.

Organic substances have been used as additives to batteries to reduce wasteful corrosion of the zinc under open-circuit conditions. For example, polyoxyethylene, lauryl ethers and other fluorinated additives have been incorporated into batteries to prevent open-circuit corrosion of the zinc. However, many additives which are used to control hydrogen evolution may, in fact, worsen cell leakage during prolonged discharge.

The present invention provides a method for reducing leakage from an electrical cell of the zinc chloride or Leclanche type, which method comprises the step of incorporating in the cell a compound of general formula Ar-X, wherein Ar is an aromatic group and X is a sulphur-containing group linked to the aromatic group by sulphur.

Typically, electrical cells to which the present invention may be applied have a casing comprising zinc in which may be situated separator means and a cathode mix. It is customary to include the electrolyte of the cell in the cathode mix. Examples of such a cell of the zinc chloride type are described in the specifications of U.K. Patent Applications Nos. 8718838 and 8826738.0.

The component of general formula Ar-X may be incorporated in the cathode mix in the cell or in the separator means within the cell. The separator means may comprise a conventional paper separator or a paste separator. For example, the compound of general formula Ar-X may be incorporated in a coating composition applied to the paper separator preferably in an amount such as to form 0.1 to 20% by dry weight of the coating composition more preferably around 5%. Alternatively, 0.1 mg to 50.0 mg of the compound of general formula Ar-X may be incorporated in each g of the cathode mix, preferably 1 to 2.5 mg of the compound of general formula Ar-X may be incorporated.

The aromatic group of the compound of general formula Ar-X may be an aryl group such as benzene, naphthalene, anthracene or phenanthrene. Alternatively, the aromatic group may be a heteroaromatic group such as pyridine, quinoline, isoquinoline, phenanthridine, pyrimidine, pyrrole, furan or thiophene. The sulphur containing group may be sulphonate or sulphonamide. The aromatic group may be substituted or unsubstituted. Suitable substituents of the aromatic group include alkyl, aryl, amide, amine, carbonyl, halogen, hydroxyl, nitro, thiol or a further sulphonate or sulphonamide. Examples of alkyl group substituents include $C_{1-12}$ alkyl groups or cycloalkyl groups. A preferred Example of a compound of the general formula Ar-X is saccharin. Further preferred Examples include sulphonates or sulphonamides of any one of the following, benzene, toluene, xylene, mesitylene, phenol, aniline, nitrobenzene, naphthalene, naphthol, naphthylamine or anthraquinone; such as sodium saccharin, benzene sulphonamide, sodium toluene sulphonate, sodium mesitylene sulphonate, sodium naphthalene -1- sulphonate, sodium naphthalene -2- sulphonate, pyridine -2- sulphonic acid, pyridine -3- sulphonic acid, pyridine -4-sulphonic acid, toluene sulphonamide, sulphanilamide, trisodium benzene - 1,2,3 - trisulphonate, trisodium benzene -1,2,4 - trisulphonate, trisodium benzene -1,3,5 -trisulphonate, sodium vinylbenzene -2- sulphonate, sodium vinylbenzene -3- sulphonate, sodium vinylbenzene -4-sulphonate, poly(sodium styrene -4- sulphonate), sodium dodecyl benzene -2- sulphonate, sodium dodecyl benzene -3-sulphonate, sodium dodecyl benzene -4- sulphonate, sodium cumene -2- sulphonate, sodium cumene -3- sulphonate, sodium cumene -4- sulphonate, sodium anthraquinone -2- sulphonate, sodium anthraquinone -3- sulphonate, and each of the substitution isomers of sodium naphthol sulphonate, disodium naphthalene disulphonate, sodium naphthylamine sul-

2

phonate and disodium anthraquinone disulphonate.

The invention also provides a coating composition for a paper separator for an electrical cell, the coating composition having incorporated therein a compound of the general formula Ar-X as defined above. There is also provided a paper separator for an electrical cell to which the coating composition has been applied. There is further provided a cathode mix for an electrical cell, the mix having incorporated therein a compound of general formula Ar-X as defined above. There is further provided an electrical cell of the zinc chloride or Leclanche type having incorporated therein the compound of general formula Ar-X as defined above.

Tests on the effectiveness of the cells of the present invention have been performed. Over a period of 28 days, cells of the present invention (incorporating an additive in either the cathode mix or the coating of the paper separator) were compared with cells containing no additive under extended discharge conditions. It was found that the amount of material leaked was reduced in cells of the present invention. The results of this test are presented in Table 1.

Table 1

| DAT (Discharge Abuse Test) Leakage in Zinc Chloride Cells | |
|---|---|
| ADDITIVE | AMOUNT OF LEAKAGE ON DAT |
| Na Naphthol -4- sulphonate | 38% |
| Na Anthraquinone -2- sulphonate | 40% |
| Na Xylenesulphonate | 47% |
| Toluene -4- sulphonamide | 47% |
| Na Toluene -4- sulphonate | 49% |
| Na Naphthalene -1,5- sulphonate | 62% |
| Na Napthylamine -4- sulphonate | 62% |
| Benzenesulphonamide | 64% |
| Na Dodecylbenzenesulphonate | 65% |
| Na Mesitylenesulphonate | 65% |
| Na Naphthalene -1- sulphonate | 65% |
| Na Naphthalene -2, 6- sulphonate | 65% |
| Na Benzenesulsphonate | 67% |
| Na Naphthalene -2- sulphonate | 67% |
| Na Cumenesulphonate | 69% |
| Na Pyridinesulphonate | 69% |
| Na Saccharin | 69% |
| Na Anthraquinone -2, 6- sulphonate | 71% |
| Na Benzenetrisulphonate | 71% |
| Sulphanilamide | 71% |
| Na Styrene -4- sulphonate | 73% |
| Polysodium -4- styrenesulphonate | 73% |
| Sodium Vinyl -4- sulphonate | 73% |
| NO ADDITIVE | 100% (equivalent to 5.5g of liquid leaking from cell) |

In a further test, over a set period it was found that 60% of the cells without any additive leaked whereas none of the cells of the present invention leaked over that period.

The mechanism by which the compounds of the present invention work is not yet fully understood. However, it is likely that during conditions of extended discharge, where there are discontinuities in the zinc casing of the cells, some portions of the casing may be electrochemically corroded to a point where leakage occurs. It is thought possible that the compounds of the present invention may be selectively adsorbed to areas where the discontinuities occur and may thereby inhibit corrosion in those areas.

A further advantage of the present invention is that incorporation of the compounds of general formula Ar-X may result in improved performance of the electrical cells. It has been found that the lifetime of the cells is increased when the compounds of general formula Ar-X are incorporated in the cells as described above. The lifetime of these cells may be extended by up to 20% on certain tests.

The following Example serves to illustrate three embodiments of the invention.

## EXAMPLE 1

Cells were prepared having a cathode mix comprising electrolytic manganese dioxide, carbon black, zinc chloride electrolyte and 0.1% sodium naphthalene -2- sulphonate. In a discharge abuse test it was found that the amount of leakage was 67% that of similar cells having no additive.

## EXAMPLE 2

Cells were prepared having a paper separator with a coating comprising starch, PVA, dye and 5% sodium xylenesulphonate. In a discharge abuse test it was found that the amount of leakage was 47% that of similar cells having no additive.

## EXAMPLE 3

Cells were prepared having a paper separator with a coating comprising methyl cellulose, dye, and 5% sodium naphthalene -2- sulphonate. In a discharge abuse test it was found that the amount of leakage was 67% that of similar cells having no additive.

## Claims

1. A method for reducing leakage from an electrical cell of the zinc chloride or Leclanche type, which method comprises the step of incorporating in the cell a compound of general formula Ar-X, wherein Ar is an aromatic group and X is a sulphur-containing group linked to the aromatic group by sulphur.

2. A method as claimed in claim 1, wherein the compound of general formula Ar-X is incorporated in the cathode mix in the cell or in the separator means within the cell.

3. A method as claimed in claim 2, wherein the separator means is a paper separator.

4. A method as claimed in claim 3, wherein the compound of general formula Ar-X is incorporated in a coating composition applied to the paper separator.

5. A method as claimed in claim 4, wherein the compound of general formula Ar-X is added to the coating composition in an amount such as to form 0.1 - 20% by weight of the coating composition.

6. A method as claimed in claim 5, wherein the compound of general formula Ar-X is added to the coating composition in an amount such as to form about 5% by weight of the coating composition.

7. A method as claimed in claim 2, wherein 0.1 - 50.0 mg of the compound of general formula Ar-X is incorporated in each gram of the cathode mix.

8. A method as claimed in claim 7, wherein 1 to 2.5 mg of the compound of general formula Ar-X is incorporated in each gram of the cathode mix.

9. A method as claimed in any one of claims 1 to 8, wherein the aromatic group is an aryl group or a heteroaromatic group.

10. A method as claimed in claim 9, wherein the aryl group is benzene, naphthalene, anthracene or phenanthrene.

11. A method as claimed in claim 9, wherein the heteroaromatic group is pyridine, quinoline, isoquinoline, phenanthridine, pyrimidine, pyrrole, furan or thiophene.

12. A method as claimed in any one of the preceding claims, wherein the sulphur-containing group is sulphonate or sulphonamide.

13. A method as claimed in any one of the preceding claims wherein the aromatic group is substituted with alkyl, aryl, amide, amine, carbonyl, halogen, hydroxyl, nitro, thiol or further sulphonate or sulphonamide.

14. A method as claimed in claim 13, wherein the alkyl group is a $C_{1-20}$ alkyl group or a cycloalkyl group.

15. A method as claimed in any one of claims 12 to 14, wherein the aromatic compound of general formula Ar-X is saccharin, or a sulphonate or sulphonamide of one of the following: benzene, toluene, xylene, mesitylene, phenol, aniline, nitrobenzene, naphthalene, naphthol, naphthylamine or anthraquinone.

16. A coating composition for a paper separator for an electrical cell, the coating composition having incorporated therein a compound of general formula Ar-X as defined is any one of the preceding claims.

4

17. A coating composition as claimed in claim 16, wherein the compound of general formula Ar-X is incorporated in an amount such as to form 0.1 to 20% by weight of the coating composition.

18. A coating composition as claimed in claim 17, wherein the compound of general formula Ar-X is in an amount such as to form about 5% by weight of the coating composition.

19. A paper separator for an electrical cell to which has been applied a coating composition as defined in any one of claims 16 to 18.

20. A cathode mix for an electrical cell, the mix having incorporated therein a compound of general formula Ar-X as defined in any one of claims 1 to 14.

21. A cathode mix as claimed in claim 20, wherein 0.1 -50.0mg of the compound of general formula Ar-X is incorporated per gram of the mix.

22. A cathode mix as claimed in claim 21, wherein 1- 2.5mg of the compound of general formula Ar-X is incorporated per gram of the mix.

23. An electrical cell of the zinc chloride or Leclanche type having incorporated therein a compound of general formula Ar-X as defined in any one of claims 1 to 14.